# EUROPEAN PATENT APPLICATION

(11) **EP 4 253 020 A2**
(43) Date of publication of application: **04.10.2023**
(21) Application number: 23163918.8
(22) Date of filing: 24.03.2023
(51) Int. Cl.: B29D 11/00

(54) **DYEING SYSTEM**

(30) Priority: 31.03.2022 JP 2022058575
(71) Applicant: NIDEK CO., LTD., Gamagori Aichi (JP)
(72) Inventor: ABE, Koji, Gamagori Aichi (JP); SHIBATA, Ryoji, Gamagori Aichi (JP); INUZUKA, Minoru, Gamagori Aichi (JP); TANAKA, Motoshi, Gamagori Aichi (JP); NAKAMURA, Shigenobu, Gamagori Aichi (JP); IMAMURA, Motoki, Gamagori Aichi (JP)
(74) Representative: Hoefer & Partner Patentanwälte mbB

(57) **Abstract**

A dyeing system dyes a lens made of resin. The dyeing system includes a transport device, an ultraviolet irradiation device and a controller. The ultraviolet irradiation device includes a light source emitting an ultraviolet light. The controller implements an information acquisition step, a determination step, and an ultraviolet irradiation step. In the information acquisition step, information on a lens included in a transport unit transported by the transport device is acquired. In the determination step, it is determined whether or not it is necessary to be irradiated with the ultraviolet light for each transport unit based on the information related to the lens. In the ultraviolet irradiation step, an irradiation of the ultraviolet light is performed on the lens of the transport unit determined to be necessary to be irradiated with the ultraviolet light.

## Description

### TECHNICAL FIELD

The present disclosure relates to a dyeing system that dyes a lens made of resin.

### BACKGROUND ART

Various techniques have been proposed for dyeing a lens made of resin. For example, in a dyeing method called an immersion dyeing method, the lens is dyed by immersing the lens in a dyeing solution. In addition, a technique in which the lens is dyed by transferring a dye to a surface of the lens and heating the lens to which the dye is adhered has been proposed.

In order to improve the quality of lens dyeing, a technique of irradiating the lens before dyeing with ultraviolet light has also been disclosed. For example, in a dyeing method described in JP2010-032639A, the lens surface is irradiated with the ultraviolet light to cut the bonds of the main chains or side chains of the polymer organic compound constituting the lens, thereby improving the uniformity of dyeing.

A step of irradiating the lens with the ultraviolet light was performed manually by an operator. Therefore, it was difficult to reduce the burden on the operator when dyeing the lens. In addition, when lens is dyed, it is difficult to sufficiently improve the dyeing quality unless an appropriate step is performed for each of a plurality of different types of lenses. That is, it is desired for a technique capable of dyeing each of a plurality of different types of lenses with high quality while suppressing an increase in the burden on the operator.

### SUMMARY OF INVENTION

A typical object of the present disclosure is to provide a dyeing system capable of dyeing each of a plurality of different types of lenses with high quality while suppressing an increase in the burden on an operator.
(1) A dyeing system that dyes a lens made of resin, the dyeing system including:
   a transport device configured to transport a transport unit including the lens;
   an ultraviolet irradiation device having a light source that emits ultraviolet light and configured to irradiate the lens to be dyed with the ultraviolet light; and
   a controller configured to:
      acquire information related to the lens of the transport unit transported by the transport device;
      determine whether or not it is necessary to be irradiated with the ultraviolet light for each of the transport units, based on the acquired information related to the lens; and
      cause the ultraviolet irradiation device to perform an irradiation of the ultraviolet light on the lens of the transport unit determined to be necessary to be irradiated with the ultraviolet light.
(2) The dyeing system according to the above-described (1),
   in which the controller is configured to change an irradiation condition of the ultraviolet light for the lens, based on the acquired information related to the lens, in a case of performing the irradiation of the ultraviolet light.
(3) The dyeing system according to the above-described (1) or (2), further including:
   a transfer device configured to transfer a dye adhered to a base body to the lens, in a state where the base body to which the dye is adhered faces the lens of the transport unit; and
   a dye fixing device configured to heat the lens to which the dye is transferred by the transfer device to fix the dye adhered to a surface of the lens on the lens.
(4) The dyeing system according to the above-described (3),
   in which the transport device is configured to transport each of the transport units in an order of the ultraviolet irradiation device, the transfer device, and the dye fixing device.
(5) The dyeing system according to the above-described (3) or (4),
   in which the dye fixing device is a laser fixing device configured to heat the lens to which the dye is transferred by the transfer device by irradiating the surface of the lens with a laser beam, to fix the dye adhered to the surface of the lens on the lens.
(6) The dyeing system according to any one of the above-described (3) to (5), further including:
   a base body placing device configured to place the base body to which the dye is adhered at a predetermined position of the transport unit including the lens,
   in which the transport device is configured to transport each of the transport units in an order of the ultraviolet irradiation device, the base body placing device, the transfer device, and the dye fixing device.
(7) The dyeing system according to any one of the above-described (1) to (6),
   in which the light source provided in the ultraviolet irradiation device is a germicidal lamp in which a sealing gas, mercury, and an electrode coated with an electron-emitting material are enclosed inside a tube having a tube wall made of a material through which the ultraviolet light transmits.
(8) The dyeing system according to any one of the above-described (1) to (7),
   in which the ultraviolet irradiation device further includes:
      a shutter configured to be moved to a blocking position between an ultraviolet irradiation position and the light source, to block the ultraviolet light emitted from the light source toward the ultraviolet irradiation position where the transport unit is disposed for the irradiation of the ultraviolet light on the lens; and
      a shutter driving unit configured to move the shutter between the blocking position and a retracted position retracted from the blocking position, and
   the controller is configured to control an operation of the shutter driving unit to switch between the irradiation and the blocking of the ultraviolet light directed toward the ultraviolet irradiation position.
(9) The dyeing system according to the above-described (8),
   in which the light source is continuously remained on over an interval between the irradiation of the ultraviolet light on a plurality of the transport units.
(10) The dyeing system according to any one of the above-described (1) to (9),
   in which the ultraviolet irradiation device includes:
      a light source accommodation unit made of a material that blocks the ultraviolet light and accommodating the light source inside of the light source accommodation unit; and
      an ultraviolet passing unit formed at a lower part of the light source accommodation unit and allowing the ultraviolet light emitted from the light source to pass below the light source accommodation unit, and
   while the transport unit is disposed at a predetermined ultraviolet irradiation position where the transport unit is in contact with a bottom surface of the light source accommodation unit, the ultraviolet light emitted from the light source passes through the ultraviolet passing unit and is irradiated on the lens of the transport unit, and a leakage of the ultraviolet light to an outside is blocked by the light source accommodation unit and the transport unit at the ultraviolet irradiation position.
(11) The dyeing system according to any one of the above-described (1) to (10),
   in which the ultraviolet irradiation device further includes:
      an elevating mechanism configured to lift and lower the transport unit to move the transport unit between a transport path of the transport device and an ultraviolet irradiation position above the transport path, and
   while the elevating mechanism disposes the transport unit at the ultraviolet irradiation position, the transport device is configured to allow another transport unit to pass through the transport path below the transport unit at the ultraviolet irradiation position.

According to the dyeing system of the present disclosure, each of a plurality of different types of lenses can be dyed with high quality while suppressing an increase in the burden on the operator.

### BRIEF DESCRIPTION OF DRAWINGS

FIG. 1 is a block diagram illustrating a system configuration of a dyeing system 1.
FIG. 2 is a perspective view of a dyeing tray 80 in a state where two lenses L are installed and a dye-containing base body is not installed as viewed from diagonally upper right.
FIG. 3 is a perspective view of an ultraviolet irradiation device 20 as viewed from diagonally front right.
FIG. 4 is a perspective view of an elevating mechanism 210 as viewed from diagonally front right.
FIG. 5 is a perspective view of an irradiation unit 220 in a state where a top surface, a front surface, a right side surface, and a left side surface of a light source accommodation unit 222 are removed, as viewed from diagonally front right.
FIG. 6 is a perspective view of the irradiation unit 220 in a state where the top surface, the front surface, the right side surface, and the left side surface of the light source accommodation unit 222 and a light source 223 are removed, as viewed from diagonally front right.
FIG. 7 is a cross-sectional view taken along line A-A in FIG. 3 in a state where a transport unit U is at a delivery position and a shutter 227B is at a blocking position.
FIG. 8 is a cross-sectional view taken along line A-A in FIG. 3 in a state where the transport unit U is at an ultraviolet irradiation position PB and the shutter 227B is at a retracted position.
FIG. 9 is a flowchart of irradiation control processing performed by the ultraviolet irradiation device 20.

### DESCRIPTION OF EMBODIMENTS

### <Overview>

A dyeing system exemplified in the present disclosure dyes a resin lens. A dyeing system is provided with a transport device, an ultraviolet irradiation device, and a controller. The transport device transports a transport unit including the lens. The ultraviolet irradiation device is provided with a light source emitting ultraviolet light, and irradiates the lens to be dyed with the ultraviolet light. A controller implements an information acquisition step, a determination step, and an ultraviolet irradiation step. The information acquisition step acquires information related to the lens of the transport unit transported by the transport device. In the determination step, it is determined whether or not it is necessary to be irradiated with the ultraviolet light for each transport unit based on the information related to the lens acquired in the information acquisition step. In the ultraviolet irradiation step, an irradiation step of the ultraviolet light is performed by an ultraviolet irradiation device on the lens of the transport unit determined to be necessary to be irradiated with the ultraviolet light in the determination step. The controller does not implement the irradiation step of the ultraviolet light on the lens of the transport unit that is determined not to be necessary to be irradiated with the ultraviolet light in the determination step.

In the resin lenses, a resin lens whose dyeing quality improves by irradiating the lens with the ultraviolet light before dyeing, and a resin lens whose dyeing quality deteriorates when the lens is irradiated with the ultraviolet light before dyeing exist in a mixed state. According to the dyeing system of the present disclosure, the ultraviolet light is automatically irradiated on the lens of the transport unit determined to be necessary to be irradiated with the ultraviolet light among the plurality of transport units including the lenses. Therefore, each of a plurality of different types of lenses is dyed with high quality, and an increase in work load is appropriately suppressed.

The information related to the lens of the transport unit acquired in the information acquisition step may include information on a base material of the lens. In the determination step, it may be determined whether or not it is necessary to be irradiated with the ultraviolet light (whether ultraviolet irradiation is necessary or not) depending on the base material of the lens included in the transport unit. In this case, whether the ultraviolet irradiation is necessary or not is appropriately determined depending on the base material of the lens. Specifically, the information related to the lens of the transport unit acquired in the information acquisition step may include information related to the refractive index of the base material of the lens. In resin lenses, there are many cases that whether it is appropriate or not to irradiate the lens with the ultraviolet light before dyeing depends on the refractive index of the lens. Therefore, by using information related to the refractive index of the lens, it is possible to more appropriately determine whether the ultraviolet irradiation is necessary or not. In addition, whether or not it is necessary to be irradiated with the ultraviolet light may be set in advance for each transport unit depending on the type of lens. In this case, the information related to the lens of the transport unit acquired in the information acquisition step may be information indicating whether or not it is necessary to be irradiated with the ultraviolet light.

The dyeing system may be provided with a reading unit that reads information related to the transport unit. The controller may acquire information related to the lens read by the reading unit in the information acquisition step. In this case, the information related to the lens of the transport unit is appropriately acquired for each transport unit.

The reading unit may include an identifier reading unit that reads an identifier provided for each transport unit. The controller may acquire information corresponding to the identifier read by the identifier reading unit from a database that stores information related to the lens (for example, information on the base material of the lens, and the like) for each transport unit. In this case, for example, even in a case where the order of a plurality of transport units is changed, the information related to the lenses of each transport unit is appropriately understood by the controller. The identifier may be provided, for example, on the dyeing tray on which the lens is placed, or on a base body (details will be described later) used in a transfer step.

The wavelength of the ultraviolet light (normally 400 nm or less) emitted by the light source of the ultraviolet irradiation device may be 300 nm or less. In this case, even a lens or the like made of a base material having a high refractive index can be easily dyed with higher quality. In the present disclosure, a light source that emits the ultraviolet light with a peak wavelength of 254 nm is used.

In the ultraviolet irradiation step, in a case of implementing the irradiation step of the ultraviolet light, the controller may change an irradiation condition of the ultraviolet light for the lens based on the information related to the lens (hereinafter referred to as "lens information") acquired in the information acquisition step. In the resin lenses, in addition to the suitability of ultraviolet irradiation, appropriate irradiation conditions in the ultraviolet irradiation also vary depending on the lens. Therefore, the dyeing quality of the lens is further improved by changing the irradiation conditions of the ultraviolet light based on the information related to the lens.

The irradiation condition of the ultraviolet light to be changed based on the lens information may be a condition that can appropriately adjust the integrated amount of ultraviolet light irradiated on the lens. For example, the irradiation condition may be the irradiation time of the ultraviolet light for the lens. In this case, even when the output of the ultraviolet light irradiated on the lens is not changed, appropriately changing the irradiation time allows irradiation of the ultraviolet light under conditions suitable for each lens (in other words, the integrated amount of ultraviolet light irradiated on the lens becomes the amount of light suitable for the lens). That is, since control for changing the output of the light source or the like according to the lens information becomes unnecessary, the irradiation step is unlikely to be complicated. In addition, since it is also possible to use a light source (for example, germicidal lamp to be described later) having a constant emission output of ultraviolet light, the options for the light source are increased. However, the controller may change other irradiation conditions together with the irradiation time or separately from the irradiation time according to the lens information. For example, the controller may adjust the integrated amount of ultraviolet light irradiated on the lens by changing the irradiation conditions such as the output of the ultraviolet light irradiated on the lens based on the lens information. In addition, in a case where the ultraviolet irradiation device is provided with the plurality of light sources, the controller may adjust the integrated amount of ultraviolet light irradiated on the lens by changing as the irradiation condition the number of light sources that irradiate the lens with the ultraviolet light. In addition, in a case where the lens is moved within the ultraviolet irradiation area, the controller may adjust the integrated amount of ultraviolet light by changing the moving speed of the lens within the irradiation area based on the lens information. In addition, the controller may adjust the integrated amount of ultraviolet light by changing the ratio of the ultraviolet irradiation time and the non-irradiation time for the lens based on the lens information. It goes without saying that a plurality of irradiation conditions may be changed based on the lens information.

The dyeing system may be provided with a transfer device and a dye fixing device. The transfer device transfers the dye adhered to the base body to the lens in a state where the base body to which the dye is adhered faces the lens of the transport unit. The dye fixing device heats the lens to which the dye is transferred by the transfer device to fix the dye adhered to the surface of the lens on the lens. In this case, the lens irradiated with the ultraviolet light by the ultraviolet irradiation device is appropriately dyed by the transfer device and the dye fixing device.

Each transport unit may be transported in the order of the ultraviolet irradiation device, the transfer device, and the dye fixing device by the transport device. In this case, after the ultraviolet irradiation step is appropriately performed on the lens necessary to be irradiated with the ultraviolet light, a transfer step and a fixing step of the dye to the lens are smoothly performed.

The dye fixing device may be a laser fixing device that fixes the dye adhered to the surface of the lens on the lens by irradiating and heating the surface of the lens onto which the dye is transferred by the transfer device with a laser beam. According to the laser fixing device, the dye can be fixed in a shorter period of time than a case where the dye is fixed on the lens by an oven or the like. On the other hand, in a case where the dye is fixed on the lens by the laser fixing device, the number of types of lenses for which it is difficult to improve the dyeing quality is increased unless the ultraviolet light is irradiated before dyeing, compared to the case of using an oven or the like. In contrast, according to the dyeing system of the present disclosure, the ultraviolet light is automatically irradiated on the lens of the transport unit determined to be necessary to be irradiated with the ultraviolet light. Therefore, each of a plurality of different types of lenses is dyed with high quality in a short period of time.

The dyeing system may be further provided with a base body placing device that places the base body to which the dye is adhered at a predetermined position of the transport unit including the lens. Each transport unit may be transported in the order of the ultraviolet irradiation device, the base body placing device, the transfer device, and the dye fixing device by the transport device. In this case, at a stage where the lens is irradiated with the ultraviolet light by the ultraviolet irradiation device, the base body is not placed on the transport unit. Therefore, the ultraviolet light emitted from the ultraviolet irradiation device is not blocked by the base body and are appropriately irradiated onto the lens. Compared with the case where the lens is irradiated with the ultraviolet light in a state where the base body is placed, it is easier to simplify the configuration of the ultraviolet irradiation device.

The light source may be a germicidal lamp in which a sealing gas, mercury, and an electrode coated with an electron-emitting material are enclosed inside a tube having a tube wall made of a material through which the ultraviolet light transmits (that is, so-called fluorescent lamp-type germicidal lamp in which no fluorescent substance is applied to the tube wall). By use of a fluorescent lamp-type germicidal lamp, the manufacturing cost, maintenance cost, and the like of the device can be easily reduced as compared with the case of using other light sources (for example, mercury lamp, and the like). However, it is also possible to adopt an ultraviolet emitting light source other than a fluorescent lamp-type germicidal lamp.

The ultraviolet irradiation device may be further provided with a shutter and a shutter driving unit. The shutter is moved to a blocking position between the ultraviolet irradiation position and the light source, to block the ultraviolet light emitted from the light source toward the ultraviolet irradiation position where the transport unit is disposed for the irradiation of the ultraviolet light on the lens. The shutter driving unit moves the shutter between the blocking position and a retracted position retracted from the blocking position. The controller may control an operation of the shutter driving unit to switch between the irradiation and the blocking of the ultraviolet light directed toward the ultraviolet irradiation position. In this case, the irradiation and the blocking of the ultraviolet light directed toward the ultraviolet irradiation position are quickly switched by the shutter and the shutter driving unit. For example, even when the light source is not finely switched to be turned on and off, the irradiation and the blocking of the ultraviolet light can be appropriately switched by using the shutter and the shutter driving unit.

The light source may be continuously remained on over an interval of the irradiation steps of the ultraviolet light on the plurality of transport units. In this state, the irradiation and the blocking of the ultraviolet light may be switched by the shutter and the shutter driving unit. In general, the output of a light source is often stabilized after a certain period of time has passed after the light source is turned on. In addition, in many light sources, the more frequently the light is repeatedly turned on and off, the shorter the life of the light source. Therefore, by continuously remaining on the light source over the interval of the irradiation steps and switching between the irradiation and the blocking of the ultraviolet light by the shutter, it is likely to irradiate the lens with the ultraviolet light with a more stable output, and increase the life of the light source.

The output of the above-described fluorescent lamp-type germicidal lamp stabilizes after a certain period of time has elapsed since the lamp is turned on, and the more the lamp is repeatedly turned on and off, the shorter the life of the lamp. Furthermore, the power required when the fluorescent lamp-type germicidal lamp is turned on is greater than the power required while the fluorescent lamp-type germicidal lamp is continuously remained on. Therefore, especially in a case where the fluorescent lamp-type germicidal lamp is used as a light source, it is effective to continuously turn on the light source for the interval of the irradiation steps.

However, in a case of using a light source that can be easily switched to turned on and off with a stable output, the light source may be turned off each time one ultraviolet irradiation step is completed.

The ultraviolet irradiation device may be further provided with a light source accommodation unit. The light source accommodation unit is made of a material that blocks the ultraviolet light and stores the light source therein. A portion at the lower part of the light source accommodation unit may be formed with an ultraviolet passing unit that allows the ultraviolet light emitted from the light source to pass below the light source accommodation unit. By disposing the transport unit at a predetermined ultraviolet irradiation position in contact with the bottom surface of the light source accommodation unit, the ultraviolet light emitted from the light source may pass through the ultraviolet passing unit and be irradiated on the lens of the transport unit, and a leakage of the ultraviolet light to the outside may be blocked by the light source accommodation unit and the transport unit at the ultraviolet irradiation position.

In this case, by disposing the transport unit at the ultraviolet irradiation position, the lens is appropriately irradiated with the ultraviolet light through the ultraviolet passing unit, and leakage of the ultraviolet light to the outside is prevented. Therefore, the irradiation step of the ultraviolet light is appropriately performed in a state where safety is ensured.

The ultraviolet irradiation device may be further provided with an elevating mechanism. The elevating mechanism lifts and lowers the transport unit to move the transport unit between a transport path by the transport device and an ultraviolet irradiation position above the transport path. While the elevating mechanism disposes the transport unit at the ultraviolet irradiation position, the transport device may allow another transport unit to pass through the transport path below the transport unit at the ultraviolet irradiation position. In this case, the elevating mechanism can appropriately dispose the transport unit at the ultraviolet irradiation position by lifting the transport unit determined to be necessary to be irradiated with the ultraviolet light. Furthermore, while the transport unit is disposed at the ultraviolet irradiation position, other transport units can pass below the transport unit at the ultraviolet irradiation position; thus, it is not necessary to wait other transport units on the transport path until the irradiation step of the ultraviolet light is completed. Therefore, the dyeing step proceeds efficiently with a simple configuration.

### <Embodiment>

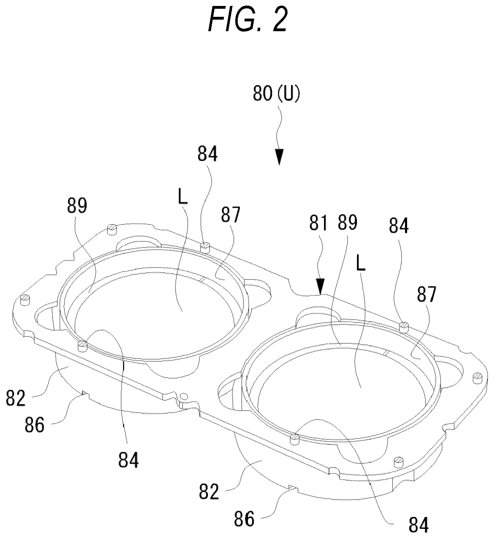

Hereinafter, one of typical embodiments according to the present disclosure will be described with reference to the drawings. A dyeing system 1 automatically and continuously dyes a resin body. In the present embodiment, the resin body to be dyed is a resin (plastic) lens L (refer to FIG. 2 and the like) used for spectacles. However, at least a part of the techniques exemplified in the present disclosure can also be applied to a case of dyeing a resin body other than the lens L. For example, in a case of dyeing various resin bodies such as a goggle, a mobile phone cover, a light cover, an accessory, a toy, a film (for example, thickness of 400 µm or less), a plate material (for example, thickness of 400 µm or more), and the like, it is also possible to apply thereto at least a part of the techniques illustrated in the present disclosure. The resin body to be dyed also includes a resin body added to a member (for example, wood or glass) different from the resin body. In addition, the dyeing system 1 of the embodiment dyes a plurality of resin bodies while continuously transporting the resin bodies. However, at least a part of the techniques exemplified in the present disclosure can be adopted in a dyeing system in which the resin bodies are transported by one set for dyeing.

### (System Configuration)

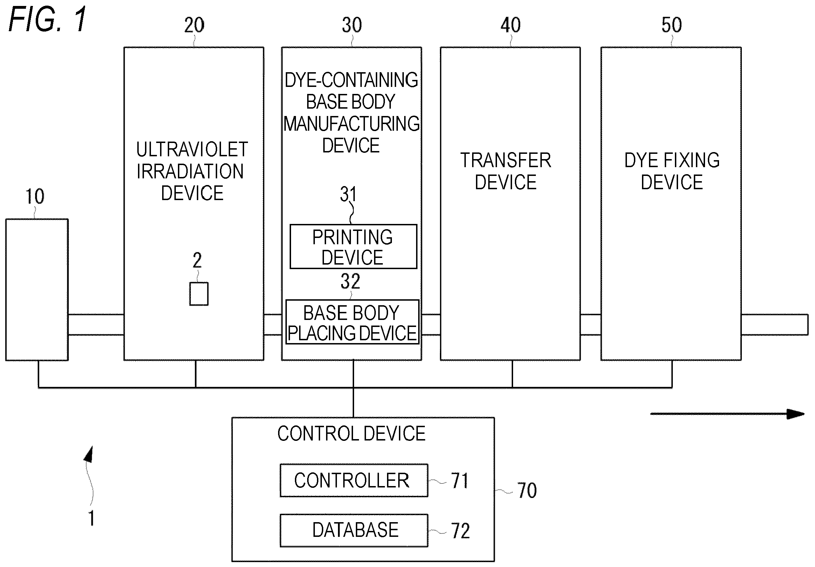

The system configuration of the dyeing system 1 in the present embodiment will be schematically described with reference to FIG. 1. The dyeing system 1 in the embodiment is provided with a transport device 10, an ultraviolet irradiation device 20, a dye-containing base body manufacturing device 30, a transfer device 40, a dye fixing device 50, and a control device 70.

The transport device 10 transports a dyeing tray 80 (refer to FIG. 2) on which the lens L that is a resin body is placed, to each device in the dyeing system 1. The dyeing tray 80 on which the lens L is placed serves as the transport unit U transported by the transport device 10. Specifically, the transport device 10 of the embodiment continuously transports a plurality of transport units U into the dyeing system 1. The transport device 10 of the embodiment transports the transport unit U in the order of the ultraviolet irradiation device 20, the dye-containing base body manufacturing device 30, the transfer device 40, and the dye fixing device 50 (that is, from left to right in FIG. 1).

The ultraviolet irradiation device 20 automatically irradiates the lens L to be dyed (in the embodiment, lens L included in the transport unit U) with the ultraviolet light. In the resin lenses L, a resin lens whose dyeing quality improves by irradiating the lens with the ultraviolet light before dyeing, and a resin lens whose dyeing quality deteriorates when the lens is irradiated with the ultraviolet light before dyeing exist in a mixed state. The ultraviolet irradiation device 20 of the embodiment selectively irradiates the ultraviolet light on the lens L of the transport unit U determined to be necessary to be irradiated with the ultraviolet light. As a result, each of a plurality of different types of lenses L is dyed with high quality, and an increase in work load is also suppressed. Details of the ultraviolet irradiation device 20 will be described later.

The dye-containing base body manufacturing device 30 manufactures a dye-containing base body (not illustrated) used in the dyeing step of dyeing the resin body (lens L). The dye-containing base body is provided with a sheet-shaped base body and a dye that adheres to one surface of the base body. In the embodiment, the base body has a metal layer (layer of aluminum foil in the embodiment) and is flexible. Specifically, the base body is formed by laminating a dye holding layer (in the embodiment, layer of a hydrophilic polymer film) for enhancing the holding power of the printed dye on a metal layer. Therefore, the dye printed on the base body is likely to be appropriately held. However, other materials such as paper, glass plate, heat-resistant resin, and ceramic can be used as the material of the base body.

The dye-containing base body manufacturing device 30 in the embodiment is provided with a printing device 31 and a base body placing device 32. The printing device 31 manufactures the dye-containing base body by printing an ink containing a dye on the base body. In the dyeing system 1 of the embodiment, in order to appropriately transfer the dye to the lens L while preventing the dye from agglomerating, and the like, the dye is transferred (deposited) to the surface of the lens L by heating the dye on the base body in a state where the base body and the lens L are separated from each other and face each other in a vacuum (including substantially vacuum) environment (dyeing method in the embodiment is referred to as a vapor phase transfer dyeing method). Therefore, in the printing device 31, an ink jet printer that prints ink containing a sublimation dye on the base body is used. In addition, the printing device 31 can also print ordinary ink that does not contain a sublimation dye on the base body. The printing device 31 performs printing based on print data created by the control device 70 which is an information processing device (in the embodiment, personal computer (hereinafter referred to as "PC"). As a result, an appropriate amount of ink (dye) adheres to an appropriate position of the base body. It is also easy to prepare the dye-containing base body for performing gradation dyeing.

It is also possible to change the configuration of the printing device 31. For example, the printing device may be a laser printer. In this case, a toner may contain a sublimation dye. In addition, instead of the printing device 31, the dye may be adhered to the base body by a dispenser (liquid quantitative coating device), a roller, or the like.

The base body placing device 32 places the dye-containing base body at a predetermined position on the dyeing tray 80 in a state where the dye printed on the base body by the printing device 31 faces (faces in a non-contact manner in the embodiment) the lens L placed on the dyeing tray 80 (refer to FIG. 2). Therefore, the dye-containing base body is automatically placed at an appropriate position on the dyeing tray 80 without the operator manually placing the dye-containing base body on the dyeing tray 80.

The transfer device 40 transfers the dye from the base body to the lens L in a state where the dye adhered to the base body faces the lens L. As described above, in the embodiment, the dye is transferred from the base body to the lens L by the vapor phase transfer method. However, it is also possible to change the method of transferring the dye to the lens L. For example, the dye may be transferred from the base body to the lens L in a state where the dye of the base body and the lens L are in contact with each other.

The dye fixing device 50 heats the lens L to which the dye is transferred by the transfer device 40 to fix the dye adhered to the surface of the lens L to the resin body. The dye fixing device 50 of the embodiment heats the lens L by irradiating the lens L with a laser beam which is an electromagnetic wave. Specifically, the dye fixing device 50 in the embodiment is a laser fixing device provided with a laser beam source and a scanner The laser beam source emits the laser beam. The scanner scans the laser beam emitted from the laser beam source. The laser beam is two-dimensionally scanned on the surface of the lens L by the scanner, so that the surface of the lens L is heated. The laser fixing device can fix the dye onto the lens L in a shorter time than an oven or the like. However, a device (for example, oven or the like) that irradiates the lens L with an electromagnetic wave other than the laser beam may be used as the dye fixing device.

The control device 70 conducts various types of control in the dyeing system 1. As the control device 70, various information processing devices (for example, at least one of a PC, a server, a mobile terminal, and the like) can be used. The control device 70 is provided with a controller (for example, CPU or the like) 71 that conducts control, and a database 72 that stores various data. It is also possible to change the configuration of the control device 70. First, a plurality of devices may cooperate to function as the control device 70. For example, a control device that conducts various types of control in the dyeing system 1 and a control device including the database 72 may be different devices. In addition, the controllers of a plurality of devices may cooperate to perform various types of control in the dyeing system 1. For example, in many cases, at least one of the transport device 10, the ultraviolet irradiation device 20, the dye-containing base body manufacturing device 30, the transfer device 40, and the dye fixing device 50 is provided with a controller. In this case, the controller of the control device 70 and the controller of another device may cooperate to conduct control of the dyeing system 1. In the embodiment, the controller 71 of the dyeing system 1 functions as a controller that conducts control of the ultraviolet irradiation device 20.

The transport device 10 transports each transport unit U in the order of the ultraviolet irradiation device 20, the dye-containing base body manufacturing device 30, the transfer device 40, and the dye fixing device 50. Therefore, after the ultraviolet irradiation step is appropriately performed on the lens L necessary to be irradiated with the ultraviolet light, the transfer step and the fixing step of the dye to the lens L are performed. In addition, at the stage where the lens L is irradiated with the ultraviolet light by the ultraviolet irradiation device 20, the transport unit U is in a state where no dye-containing base body is placed. Therefore, the ultraviolet light emitted from the ultraviolet irradiation device 20 is appropriately irradiated onto the lens L without being blocked by the base body.

The dyeing system 1 is provided with a reading unit 2 that reads information related to the lens L to be dyed for each unit to be transported (including a dyeing tray 80 and a lens L placed on the dyeing tray 80). As an example, the reading unit 2 of the embodiment is an identifier reading unit that reads an identifier provided for each unit to be transported (for example, for each dyeing tray 80). The transport unit is specified based on the identifier read by the reading unit 2. By specifying the transport unit, information related to the lens L included in the transport unit (for example, information related to the refractive index in the base material of the lens L, and the like) is acquired.

The reading unit 2 of the embodiment is an identifier reader (for example, QR code (registered trademark) reader, a barcode reader, an identification hole reader, and the like) corresponding to the identifier being used. In addition, the reading unit 2 may be a tag reading unit that reads information from a tag (for example, IC tag) on which information can be written. In this case, information related to the lens L may be stored in the tag. In the embodiment, at least the ultraviolet irradiation device 20 is provided with the reading unit 2 of the plurality of devices constituting the dyeing system 1. However, a reading unit may be provided in a portion of the dyeing system 1 other than the ultraviolet irradiation device 20.

### (Transport Unit U and Dyeing Tray)

The transport unit U and the dyeing tray 80 will be described with reference to FIG. 2. FIG. 2 is a perspective view of the dyeing tray 80 (transport unit U) in a state where the two lenses L are installed (placed) and the base body is not installed. The dyeing tray 80 of the embodiment is provided with a tray main body 81, a placing frame 89, and a spacer 87. The resin body (lens L in the embodiment) to be dyed is placed on the placing frame 89. The placing frame 89 in the embodiment is formed in a ring shape having an outer diameter slightly larger than that of the lens L. The spacer 87 extends upward in a tubular shape (cylindrical shape) from the outer peripheral portion of a portion where the lens L is placed in the placing frame 89. A mounting unit 82 is formed on the tray main body 81. The placing frame 89 and the spacer 87 are detachably mounted on the mounting unit 82. In the embodiment, two mounting units 82 are formed on one tray main body 81. Therefore, a pair of (left and right) lenses L used for a pair of spectacles are dyed in a state of being placed on one dyeing tray 80.

A projecting unit 84 that projects upward is provided at a position outside the mounting unit 82 in the tray main body 81. In addition, bottom fitting units 86 which are recessed portions recessed upward are formed at the bottom portion of the tray main body 81 (in the embodiment, two locations on the bottom portion of each mounting unit 82). Among the plurality of projecting units 84 formed on the upper portion of the tray main body 81, four projecting units 84 adjacent to the mounting unit 82 fit into the bottom fitting units 86 of the stacked dyeing trays 80 when another dyeing tray 80 (tray main body 81) is stacked on the upper portion of the dyeing tray 80. Therefore, a plurality of dyeing trays 80 are stably stacked vertically.

### (Ultraviolet Irradiation Device)

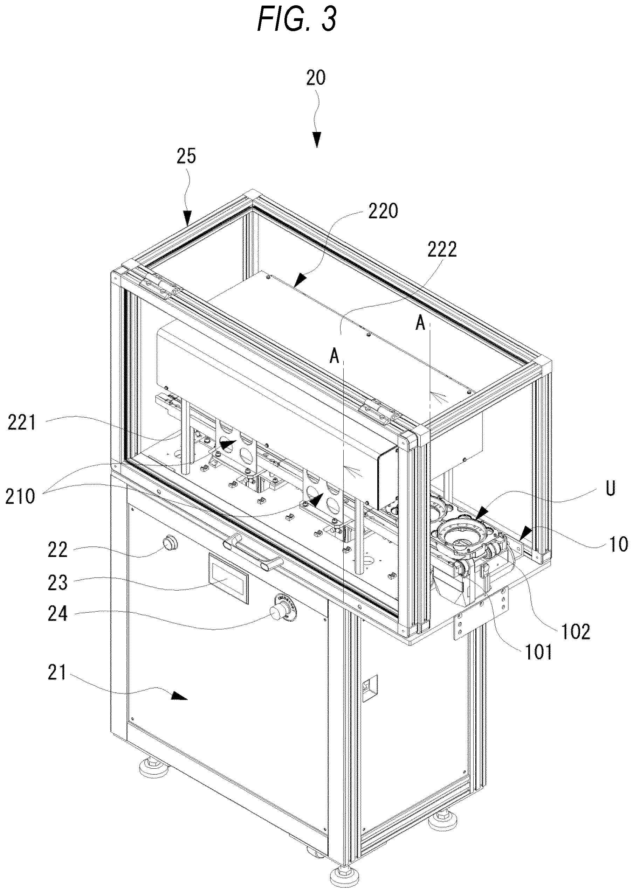

The ultraviolet irradiation device 20 will be described with reference to FIGS. 3 to 8. The lower left side on each sheet of FIGS. 3 to 6 is the front part of the ultraviolet irradiation device 20, the upper right side on each sheet of FIGS. 3 to 6 is the rear part of the ultraviolet irradiation device 20, the upper left side on each sheet of FIGS. 3 to 6 is the left side of the ultraviolet irradiation device 20, and the lower right side on each sheet of FIGS. 3 to 6 is the right side of the ultraviolet irradiation device 20.

As illustrated in FIG. 3, the ultraviolet irradiation device 20 is provided with a base unit 21 and a box unit 25. The base unit 21 serves as a base for supporting the entire ultraviolet irradiation device 20. A start switch 22, a monitor 23, and an emergency stop button 24 are provided on the front of the base unit 21. The start switch 22 is operated when starting the ultraviolet irradiation device 20. The monitor 23 displays various images. The emergency stop button 24 is operated to input an instruction to forcibly stop the operation of the ultraviolet irradiation device 20.

The box unit 25 has a substantially box shape and is fixed to the upper portion of the base unit 21. A part of the transport device 10, and an elevating mechanism 210 and an irradiation unit 220 (details will be described later) assembled to the transport device 10 are installed inside the box unit 25. A wide range (front surface, rear surface, and top surface) of the box unit 25 is formed of a transparent member. Therefore, the operator can confirm the step being implemented by the ultraviolet irradiation device 20 through the transparent member. In addition, the front surface of the box unit 25 is rotatably connected via a hinge at the upper end portion. In a case where maintenance or the like of the ultraviolet irradiation device 20 is performed, the front surface of the box unit 25 is opened.

The transport device 10 can continuously transport the plurality of transport units U from the upstream side in the transport direction (left side on the sheet of FIG. 3) to the downstream side (right side on the sheet of FIG. 3). The transport device 10 is provided with a pair of rails 101 extending in the transport direction. A rotating belt 102 disposed along the rail 101 is provided in the vicinity of the rail 101. The rotating belt 102 is connected to a transport motor (for example, step motor). By driving the transport motor, the rotating belt 102 rotates. When the rotating belt 102 rotates, the transport unit U moves along the rail 101 in the transport direction.

Sensors (photoelectric sensors in the embodiment) for detecting the presence or absence of the transport unit U are provided at a plurality of positions on the rail 101. The control device 70 can detect the position on the transport unit U transported by the transport device 10 based on the detection results of each of the plurality of sensors. In addition, the rail 101 is provided with the above-described reading unit 2 (refer to FIG. 1).

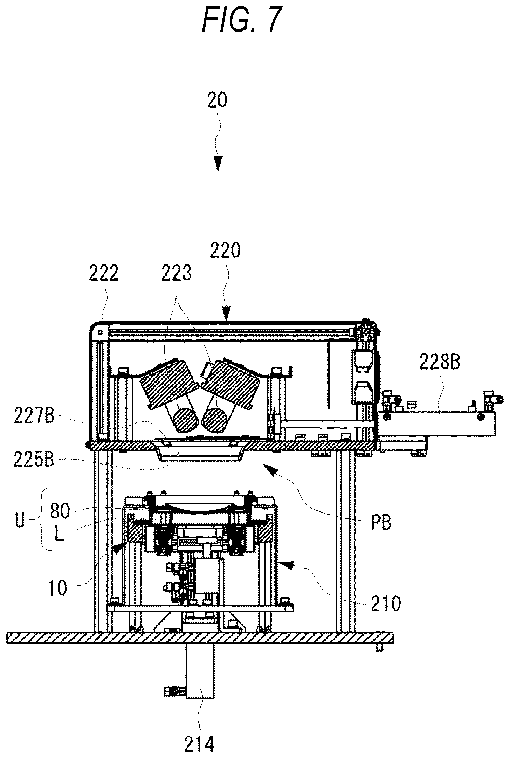

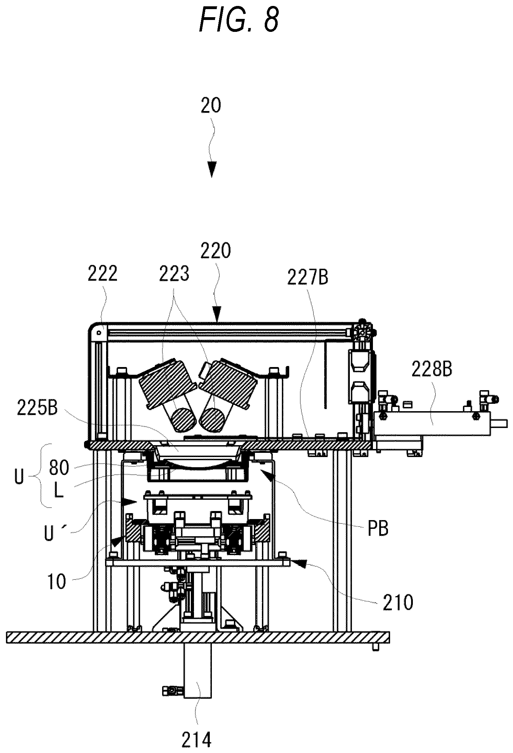

The elevating mechanism 210 will be described. The elevating mechanism 210 lifts and lowers the transport unit U to move the transport unit U between a delivery position (position of transport unit U illustrated in FIG. 7) on the transport path of the transport device 10 and an ultraviolet irradiation position (position of upper transport unit U in FIG. 8) above the delivery position. In the embodiment, two ultraviolet irradiation positions are provided. Therefore, two elevating mechanisms 210 are installed in the transport device 10 at positions corresponding to each of the two ultraviolet irradiation positions (below each of the two ultraviolet irradiation positions).

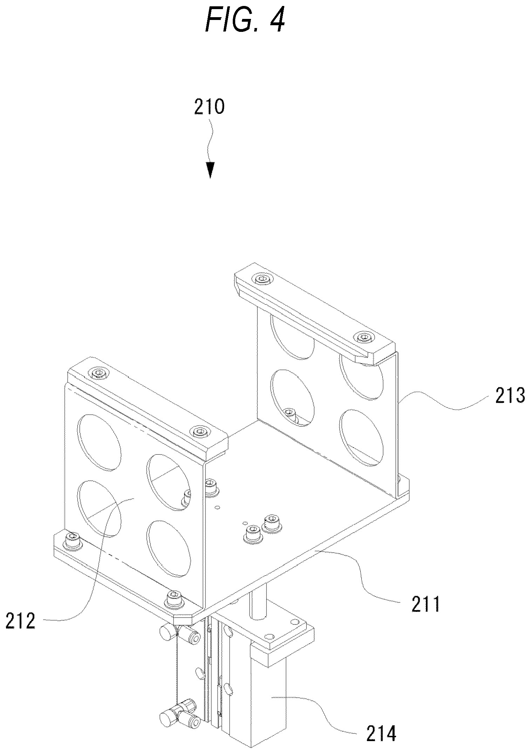

As illustrated in FIG. 4, the elevating mechanism 210 is provided with a base unit 211, a left arm unit 212, a right arm unit 213, and a vertical movement unit 214, and the base unit 211 connects the left arm unit 212 and the right arm unit 213. Specifically, the left arm unit 212 extends upward from the left end of the base unit 211 and bends rightward from the upper end portion. The right arm unit 213 extends upward from the right end of the base unit 211 and bends leftward from the upper end portion. The distance between the upper end of the left arm unit 212 and the upper end of the right arm unit 213 is set to be slightly shorter than the length of the dyeing tray 80 (refer to FIG. 2) in the horizontal direction. The left end and the right end of the dyeing tray 80 of the transport unit U are supported by the upper ends of the left arm unit 212 and the right arm unit 213 during elevating.

The vertical movement unit 214 is fixed to the base unit 211. The vertical movement unit 214 is an actuator (cylinder in the embodiment) such as a motor, a cylinder, or a solenoid. By driving the vertical movement unit 214, the base unit 211, the left arm unit 212, and the right arm unit 213 move vertically together When the left arm unit 212 and the right arm unit 213 are moved upward, in a state where the transport unit U (that is, dyeing tray 80 on which the lens L is placed) is transported to the delivery position below the ultraviolet irradiation position, the transport unit U at the delivery position is lifted and the transport unit U is moved to the ultraviolet irradiation position. After the ultraviolet irradiation step is completed, when the left arm unit 112 and the right arm unit 113 are moved down, the transport unit U is returned to the delivery position on the transport path.

The irradiation unit 220 will be described. As illustrated in FIG. 3, the irradiation unit 220 is supported above the transport path of the transport device 10 by four supports 221. The irradiation unit 220 is provided with a substantially box-shaped light source accommodation unit 222.

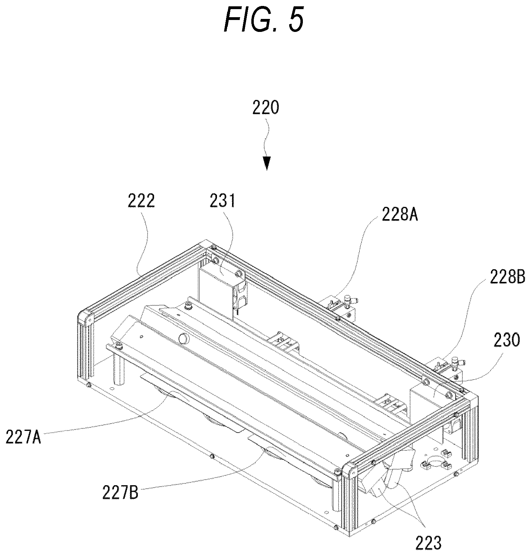

FIG. 5 is a perspective view of the irradiation unit 220 in a state where a top surface, a front surface, a right side surface, and a left side surface of a light source accommodation unit 222 are removed, as viewed from diagonally front right. As illustrated in FIG. 5, the light source accommodation unit 222 accommodates the light source 223 that emits the ultraviolet light inside of the light source accommodation unit 222. In the embodiment, the wavelength of the ultraviolet light emitted by the light source 223 is 300 nm or less. In this case, even a lens or the like made of a base material having a high refractive index can be easily dyed with higher quality. In the embodiment, the light source 223 that emits the ultraviolet light with a peak wavelength of 254 nm is used. The light source accommodation unit 222 is made of a material (such as metal) that blocks the ultraviolet light. As a result, the ultraviolet light is prevented from leaking to the outside of the light source accommodation unit 222 from portions other than ultraviolet passing units 225A and 225B, which will be described later.

In the embodiment, two elongated light sources 223 are disposed so as to cross over the four ultraviolet passing units 225A and 225B along the transport path, such that the amount of ultraviolet light passing through each of the four ultraviolet passing units 225A and 225B is uniform. Specifically, the light source 223 of the embodiment uses a so-called fluorescent lamp-type germicidal lamp. In the fluorescent lamp-type germicidal lamp, a sealing gas (for example, argon gas and the like), mercury, and an electrode coated with an electron-emitting material are enclosed in a tube having a tube wall made of a material through which the ultraviolet light transmits. By using a fluorescent lamp-type germicidal lamp as the light source 223, the manufacturing cost, maintenance cost, and the like of the device can be easily reduced as compared with the case of using other light sources (for example, a mercury lamp, and the like).

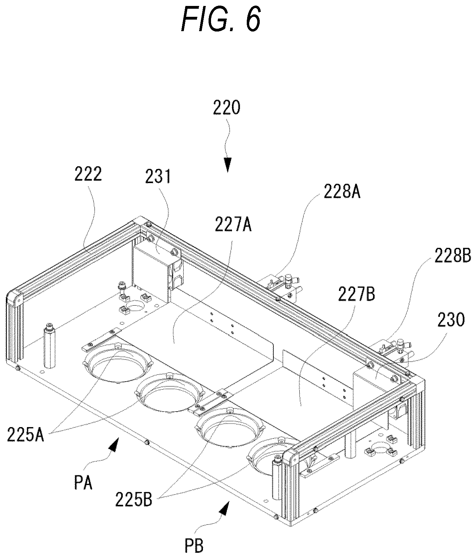

FIG. 6 is a perspective view of the irradiation unit 220 in a state where the top surface, the front surface, the right side surface, and the left side surface of the light source accommodation unit 222 and a light source 223 are removed, as viewed from diagonally front right. The ultraviolet passing unit 225 is formed at the lower part of the light source accommodation unit 222 to allow the ultraviolet light emitted from the light source 223 to pass below the light source accommodation unit 222. Therefore, by disposing the transport unit U at the ultraviolet irradiation positions PA and PB on the bottom surface side (rear side) of the light source accommodation unit 222, the lens L is appropriately irradiated with the ultraviolet light through the ultraviolet passing unit 225. In the embodiment, the ultraviolet passing unit 225 is a hole penetrating through the bottom surface of the light source accommodation unit 222. However, it is also possible to change the configuration of the ultraviolet passing unit 225. For example, an internal space of the light source accommodation unit 222 may be closed by disposing a material that transmits the ultraviolet light in the ultraviolet passing unit.

In the embodiment, two ultraviolet irradiation positions PA and PB are provided on the bottom surface side (rear side) of the light source accommodation unit 222 along the transport path. Therefore, two ultraviolet passing units 225A for passing the ultraviolet light to each of the two lenses L of the transport unit U disposed at the ultraviolet irradiation position PA, and two ultraviolet passing units 225B for passing the ultraviolet light to each of the two lenses L of the transport unit U disposed at the ultraviolet irradiation position PB are formed at the lower part of the light source accommodation unit 222.

The light source accommodation unit 222 of the irradiation unit 220 is provided with shutters 227A and 227B and shutter driving units 228A and 228B. The shutters 227A and 227B are plate-shaped members made of a material (for example, metal) that blocks the ultraviolet light. The shutters 227A and 227B are moved to the blocking position between the ultraviolet irradiation positions PA and PB where the transport unit U is disposed for the irradiation of the ultraviolet light on the lens L, and the light source 223 (refer to FIG. 5), so that the shutters 227A and 227B block the ultraviolet light emitted from the light source 223 toward the lens L.

The shutter driving units 228A and 228B are fixed to the shutters 227A and 227B. The shutter driving units 228A and 228B move the shutters 227A and 227B between the blocking position that blocks the ultraviolet light (position of the shutters 227A and 227B illustrated in FIGS. 5 and 7), and the retracted position retracted from the blocking position (position of the shutters 227A and 227B illustrated in FIGS. 6 and 8). The shutter driving units 228A and 228B are actuators (cylinders in the embodiment) such as motors, cylinders, or solenoids. The controller 71 controls the operation of the shutter driving units 228A and 228B to switch between the irradiation and the blocking of the ultraviolet light toward the ultraviolet irradiation positions PA and PB.

In the embodiment, the shutter 227A and the shutter driving unit 228A that blocks the ultraviolet light toward the ultraviolet irradiation position PA on the upstream side of the transport path, and the shutter 227B and the shutter driving unit 228B that blocks the ultraviolet light toward the ultraviolet irradiation position PB on the downstream side of the transport path are provided separately. That is, the shutters 227A and 227B and the shutter driving units 228A and 228B are provided for each of the ultraviolet irradiation positions PA and PB. Therefore, the controller 71 can independently switch the irradiation and the blocking of ultraviolet light for each of the two ultraviolet irradiation positions PA and PB.

The shutter and the shutter driving unit may be separately provided for each of the two lenses L of the transport unit U disposed at the ultraviolet irradiation positions PA and PB. That is, the shutter and the shutter driving unit may be provided for each of the plurality of ultraviolet passing units 225A and 225B (four in the embodiment) where the lens L is disposed. In this case, it is also possible to irradiate only one of the two lenses L of the transport unit U with the ultraviolet light.

The light source accommodation unit 222 is provided with an intake fan 230 that draws the external gas (air) to the inside and an exhaust fan 231 that discharges the internal gas to the outside. By driving the intake fan 230 and the exhaust fan 231, the gas inside the light source accommodation unit 222 is replaced. As a result, for example, the temperature inside the light source accommodation unit 222 is prevented from rising excessively.

The irradiation step of the ultraviolet light on the lens L with the ultraviolet light by the ultraviolet irradiation device 20 will be described with reference to FIGS. 7 and 8 and the like. FIGS. 7 and 8 are the cross-sectional views taken along line A-A in FIG. 3. Hereinafter, the configuration near the ultraviolet irradiation position PB on the downstream side of the transport path will be described as an example, and the configuration near the ultraviolet irradiation position PA on the upstream side is the same. FIG. 7 is a cross-sectional view illustrating a state where the transport unit U is at the delivery position on the transport path and the shutter 227B is at the blocking position. In the state illustrated in FIG. 7, the shutter 227B is disposed at the blocking position between the light source 223 and the ultraviolet irradiation position PB. Therefore, the ultraviolet light emitted downward from the light source 223 is blocked by the shutter 227B and does not pass through the ultraviolet passing unit 225B.

The controller 71 that conducts control of the ultraviolet irradiation device 20 determines whether or not it is necessary to irradiate the lens L of the transport unit U (that is, lens L placed on the dyeing tray 80) with ultraviolet light for each transport unit U (details will be described later). When the transport unit U determined to be necessary to be irradiated with the ultraviolet light arrives at the delivery position on the transport path of the transport device 10 illustrated in FIG. 7, arrival of the transport unit U is detected by a sensor provided in the transport device 10. When the arrival of the transport unit U is detected, the controller 71 lifts the transport unit U by controlling the operation of the vertical movement unit 214 of the elevating mechanism 210 to dispose the transport unit U at the ultraviolet irradiation position PB. Next, the controller 71 controls the operation of the shutter driving unit 228B to move the shutter 227B from the blocking position to the retracted position.

FIG. 8 is a cross-sectional view illustrating a state where the transport unit U is at the ultraviolet irradiation position PB and the shutter 227B is at the retracted position. As illustrated in FIG. 8, when the transport unit U is disposed at the ultraviolet irradiation position PB, the upper portion of the transport unit U comes into contact with the bottom surface (rear surface) of the light source accommodation unit 222. In this state, when the shutter 227B is moved to the retracted position, the ultraviolet light emitted from the light source 223 pass downward through the ultraviolet passing unit 225B and are irradiated on the lens L of the transport unit U at the ultraviolet irradiation position PB. Furthermore, the light source accommodation unit 222, and the transport unit U (specifically, dyeing tray 80) in contact with the bottom surface of the light source accommodation unit 222 at the ultraviolet irradiation position PB appropriately block the leakage of the ultraviolet light to the outside.

Here, as illustrated in FIG. 8, while the elevating mechanism 210 disposes the transport unit U at the ultraviolet irradiation position PB, another transport unit U' can pass through the transport path below the transport unit U at the ultraviolet irradiation position PB by means of . Therefore, even while the ultraviolet irradiation step is being performed on the lens L at the ultraviolet irradiation position PB, it is not necessary to wait another transport unit U' on the transport path.

When the ultraviolet irradiation step for the lens L at the ultraviolet irradiation position PB is completed, the controller 71 controls the operation of the shutter driving unit 228B to move the shutter 227B from the retracted position to the blocking position, so that the ultraviolet irradiation state is switched to the blocking state. Next, the controller 71 moves down the transport unit U by controlling the operation of the vertical movement unit 214 of the elevating mechanism 210, so that the transport unit U is disposed at the delivery position on the transport path. The transport unit U disposed at the delivery position is transported by the transport device 10 to the downstream side of the transport path (dye-containing base body manufacturing device 30 in the embodiment). Through the above, the ultraviolet irradiation step for one transport unit U is completed.

In the embodiment, the light source 223 is continuously remained on not only during implementation of the ultraviolet irradiation step, but also in the intervals of the ultraviolet irradiation steps for each of the plurality of transport units U. In this state, the shutter 227B and the shutter driving unit 228B switch between the irradiation and the blocking of the ultraviolet light. Therefore, for example, compared to the case where the light source 223 is repeatedly turned on and off at the start and end of the ultraviolet irradiation step, it is likely to irradiate the lens L with the ultraviolet light having a more stable output, and prolong the life of the light source 223. In particular, the output of the fluorescent lamp-type germicidal lamp used as the light source 223 in the embodiment stabilizes after a certain period of time has passed since the lamp is turned on, and the more the lamp is repeatedly turned on and off, the shorter the life of the lamp. Furthermore, the power required when the fluorescent lamp-type germicidal lamp is turned on is greater than the power required while the fluorescent lamp-type germicidal lamp is continuously remained on. Therefore, especially in a case where the fluorescent lamp-type germicidal lamp is used as the light source 223, it is effective to continuously turn on the light source 223 even in the intervals of the irradiation steps.

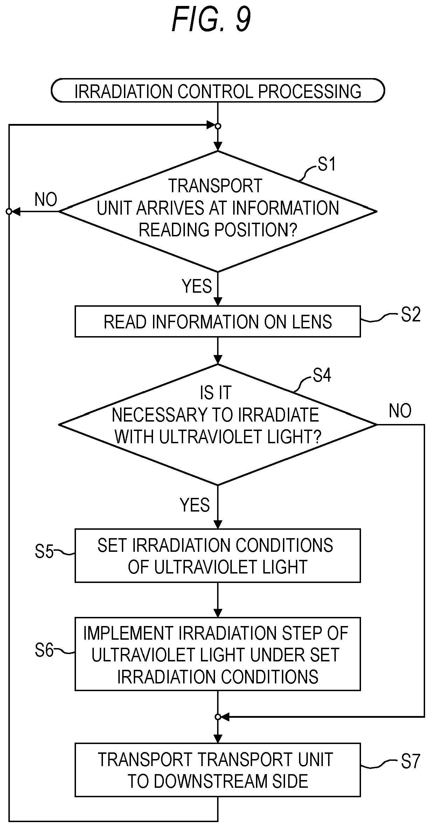

Irradiation control processing performed by the ultraviolet irradiation device 20 (dyeing system 1) of the embodiment will be described with reference to FIG. 9. The controller of the ultraviolet irradiation device 20 (in the embodiment, controller 71 of the control device 70) performs the irradiation control processing illustrated in FIG. 9 in accordance with an irradiation control program stored in a memory of the control device 70.

First, the controller 71 determines whether or not the transport unit U has arrived at the information reading position of the reading unit 2 (refer to FIG. 1) in the transport path of the transport device 10 (S1). When it has not arrived at the information reading position (S 1: NO), the processing will be in a standby state. When the transport unit U arrives at the reading position (S 1: YES), the controller 71 acquires information related to the lens L of the transport unit U read by the reading unit 2 (S2).

The controller 71 determines whether or not it is necessary to irradiate the lens L with the ultraviolet light for each transport unit U which has arrived at the reading position, based on the information related to the lens L of the transport unit U (S4). In the embodiment, the information related to the lens acquired in S2 includes information related to the base material of the lens L included in the transport unit U. In S4, it is appropriately determined whether ultraviolet irradiation is necessary or not depending on the base material of the lens L. Specifically, the information related to the lens L acquired in S2 includes information related to the refractive index of the base material of the lens L included in the transport unit U. In the resin lenses L, there are many cases that whether it is appropriate or not to irradiate the lens with the ultraviolet light before dyeing varies depends on the refractive index of the lens L. For example, lenses with refractive indices of 1.67, 1.70, 1.74, and 1.76 (so-called high-refractive index lenses) improve the dyeing quality by being irradiated with the ultraviolet light before dyeing. In S4, the information related to the refractive index of the lens L is used to more appropriately determine whether the ultraviolet irradiation is necessary or not. Whether or not to irradiate the ultraviolet light may be set in advance by the user for each base material of the lens L or the like.

When it is determined that the ultraviolet irradiation is not necessary (S4: NO), the controller 71 causes the transport device 10 to directly transport the transport unit U to the downstream side of the transport path (dye-containing base body manufacturing device 30 in the embodiment) without implementing the irradiation step of the ultraviolet light for the transport unit U. The processing returns to S1. Therefore, the lens L, which is not necessary to be irradiated with the ultraviolet light, is not irradiated with the ultraviolet light, and the dyeing quality is not adversely deteriorated.

When it is determined that it is necessary to be irradiated with the ultraviolet light (S4: YES), the controller 71 sets irradiation conditions of the ultraviolet light for the lens L based on the information related to the lens L of the transport unit U (S5). In the resin lenses L, in addition to the suitability of ultraviolet irradiation, appropriate irradiation conditions for the ultraviolet irradiation also vary depending on the lens L. Therefore, by setting the irradiation conditions of the ultraviolet light based on the information related to the lens L, the dyeing quality of the lens is further improved. In the embodiment, appropriate irradiation conditions are associated in advance according to the type of the lens L (specifically, refractive index of the base material of the lens L). In S4, the irradiation conditions associated with the type of lens L are set. The irradiation conditions according to the type of lens L may be changed by the user.

In the embodiment, the irradiation condition of the ultraviolet light set based on the lens information is the irradiation time of the ultraviolet light for the lens L. Therefore, even when the output of the ultraviolet light with which the lens L is irradiated is not changed, the irradiation time is appropriately changed (set), so that each of the lenses L is irradiated with the ultraviolet light under suitable conditions. That is, the control for changing the output of the light source 223 or the like according to the lens information becomes unnecessary, so that the irradiation step is unlikely to be complicated. In addition, it is also possible to use a light source 223 (for example, fluorescent lamp-type germicidal lamp and the like) with a constant ultraviolet emission output, as in the embodiment.

However, along with the irradiation time or apart from the irradiation time, other irradiation conditions may be changed based on the lens information. For example, the controller 71 may adjust the integrated amount of ultraviolet light irradiated on the lens L by changing the irradiation conditions such as the output of the ultraviolet light irradiated on the lens L based on the lens information. In addition, in a case where the ultraviolet irradiation device 20 is provided with the plurality of light sources 223, the controller 71 may adjust the integrated amount of ultraviolet light irradiated on the lens L by changing the number of light sources 223 that irradiate the lens L with the ultraviolet light as the irradiation condition. In addition, in a case where the lens L is moved within the ultraviolet irradiation area, the controller 71 may adjust the integrated amount of ultraviolet light by changing the moving speed of the lens L within the irradiation area based on the lens information. In addition, the controller 71 may adjust the integrated amount of ultraviolet light by changing the ratio of the ultraviolet irradiation time and the non-irradiation time for the lens L based on the lens information.

Next, the controller 71 implements the irradiation step of the ultraviolet light on the lens L under the irradiation conditions set in S5 (S6). Since the irradiation step of the ultraviolet light has already been described, detailed description thereof is omitted here. When the irradiation step of the ultraviolet light is completed, the controller 71 causes the transport device 10 to transport the transport unit U to the downstream side of the transport path, and the processing returns to S1.

The processing of acquiring information related to the lens L of the transport unit U in S2 of FIG. 9 is an example of an "information acquisition step". The processing of determining whether the ultraviolet irradiation is necessary or not for each transport unit U in S4 of FIG. 9 is an example of a "determination step". The processing of implementing the irradiation step of the ultraviolet light in S5 and S6 of FIG. 9 is an example of an "ultraviolet irradiation step".

## Claims

1. A dyeing system that dyes a lens made of resin, the dyeing system comprising:
a transport device configured to transport a transport unit including the lens;
an ultraviolet irradiation device having a light source that emits ultraviolet light and configured to irradiate the lens to be dyed with the ultraviolet light; and
a controller configured to:
acquire information related to the lens of the transport unit transported by the transport device;
determine whether or not it is necessary to be irradiated with the ultraviolet light for each of the transport units, based on the acquired information related to the lens; and
cause the ultraviolet irradiation device to perform an irradiation of the ultraviolet light on the lens of the transport unit determined to be necessary to be irradiated with the ultraviolet light.

2. The dyeing system according to claim 1,
wherein the controller is configured to change an irradiation condition of the ultraviolet light for the lens, based on the acquired information related to the lens, in a case of performing the irradiation of the ultraviolet light.

3. The dyeing system according to claim 1 or 2, further comprising:
a transfer device configured to transfer a dye adhered to a base body to the lens, in a state where the base body to which the dye is adhered faces the lens of the transport unit; and
a dye fixing device configured to heat the lens to which the dye is transferred by the transfer device to fix the dye adhered to a surface of the lens on the lens.

4. The dyeing system according to claim 3,
wherein the transport device is configured to transport each of the transport units in an order of the ultraviolet irradiation device, the transfer device, and the dye fixing device.

5. The dyeing system according to claim 3 or 4,
wherein the dye fixing device is a laser fixing device configured to heat the lens to which the dye is transferred by the transfer device by irradiating the surface of the lens with a laser beam, to fix the dye adhered to the surface of the lens on the lens.

6. The dyeing system according to any one of claims 3 to 5, further comprising:
a base body placing device configured to place the base body to which the dye is adhered at a predetermined position of the transport unit including the lens,
wherein the transport device is configured to transport each of the transport units in an order of the ultraviolet irradiation device, the base body placing device, the transfer device, and the dye fixing device.

7. The dyeing system according to any one of claims 1 to 6,
wherein the light source provided in the ultraviolet irradiation device is a germicidal lamp in which a sealing gas, mercury, and an electrode coated with an electron-emitting material are enclosed inside a tube having a tube wall made of a material through which the ultraviolet light transmits.

8. The dyeing system according to any one of claims 1 to 7,
wherein the ultraviolet irradiation device further includes:
a shutter configured to be moved to a blocking position between an ultraviolet irradiation position and the light source, to block the ultraviolet light emitted from the light source toward the ultraviolet irradiation position where the transport unit is disposed for the irradiation of the ultraviolet light on the lens; and
a shutter driving unit configured to move the shutter between the blocking position and a retracted position retracted from the blocking position, and
the controller is configured to control an operation of the shutter driving unit to switch between the irradiation and the blocking of the ultraviolet light directed toward the ultraviolet irradiation position.

9. The dyeing system according to claim 8,
wherein the light source is continuously remained on over an interval between the irradiation of the ultraviolet light on a plurality of the transport units.

10. The dyeing system according to any one of claims 1 to 9,
wherein the ultraviolet irradiation device includes:
a light source accommodation unit made of a material that blocks the ultraviolet light and accommodating the light source inside of the light source accommodation unit; and
an ultraviolet passing unit formed at a lower part of the light source accommodation unit and allowing the ultraviolet light emitted from the light source to pass below the light source accommodation unit, and
while the transport unit is disposed at a predetermined ultraviolet irradiation position where the transport unit is in contact with a bottom surface of the light source accommodation unit, the ultraviolet light emitted from the light source passes through the ultraviolet passing unit and is irradiated on the lens of the transport unit, and a leakage of the ultraviolet light to an outside is blocked by the light source accommodation unit and the transport unit at the ultraviolet irradiation position.

11. The dyeing system according to any one of claims 1 to 10,
wherein the ultraviolet irradiation device further includes:
an elevating mechanism configured to lift and lower the transport unit to move the transport unit between a transport path of the transport device and an ultraviolet irradiation position above the transport path, and
while the elevating mechanism disposes the transport unit at the ultraviolet irradiation position, the transport device is configured to allow another transport unit to pass through the transport path below the transport unit at the ultraviolet irradiation position.
